(19) Europäisches Patentamt / European Patent Office / Office européen des brevets

(11) **EP 2 421 733 B1**

(12) **EUROPÄISCHE PATENTSCHRIFT**

(45) Veröffentlichungstag und Bekanntmachung des Hinweises auf die Patenterteilung:
**17.04.2013 Patentblatt 2013/16**

(21) Anmeldenummer: **10704833.2**

(22) Anmeldetag: **22.02.2010**

(51) Int Cl.:
**B60T 13/74** *(2006.01)*      **B60T 8/44** *(2006.01)*

(86) Internationale Anmeldenummer:
**PCT/EP2010/052177**

(87) Internationale Veröffentlichungsnummer:
**WO 2010/121848 (28.10.2010 Gazette 2010/43)**

(54) **BREMSKRAFTVERSTÄRKERSYSTEM FÜR EIN BREMSSYSTEM EINES FAHRZEUGS UND VERFAHREN ZUM BETREIBEN EINES BREMSSYSTEMS EINES FAHRZEUGS**

BRAKE BOOSTER SYSTEM FOR A VEHICLE BRAKE SYSTEM AND METHOD OF OPERATING A VEHICLE BRAKE SYSTEM

SYSTÈME SERVOFREIN POUR SYSTÈME DE FREINAGE D'UN VÉHICULE ET PROCÉDÉ D'OPERATION D'UN SYSTÈME DE FREINAGE D'UN VÉHICULE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **20.04.2009 DE 102009002489**
**20.01.2010 DE 102010001037**

(43) Veröffentlichungstag der Anmeldung:
**29.02.2012 Patentblatt 2012/09**

(73) Patentinhaber: **Robert Bosch GmbH**
**70442 Stuttgart (DE)**

(72) Erfinder: **MAHNKOPF, Dirk**
**71634 Eglosheim (DE)**

(56) Entgegenhaltungen:
**EP-A1- 1 808 347      DE-A1- 10 057 557**
**DE-A1- 10 327 553      DE-A1-102005 024 577**

EP 2 421 733 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Bremskraftverstärkersystem für ein Bremssystem eines Fahrzeugs. Des Weiteren betrifft die Erfindung ein Verfahren zum Betreiben eines Bremssystems eines Fahrzeugs.

Stand der Technik

Um einem Fahrer eines Fahrzeugs ein komfortables Betätigen eines Betätigungselements eines Bremssystems, wie beispielweise eines Bremspedals, zu ermöglichen, weist ein Bremssystem in der Regel einen Bremskraftverstärker auf. Der Bremskraftverstärker ist dazu ausgelegt, eine Unterstützungskraft bereitzustellen, welche zusätzlich zu einer von dem Fahrer des Fahrzeugs über das Betätigen des Betätigungselements bereitgestellten Fahrerbremskraft das Abbremsen mindestens eines Rads bewirkt. Geeignete Bremskraftverstärker sind beispielsweise in der DE 10 2005 024 577 A1, der DE 10057 557 A1 und in der DE 103 27 553 A1 beschrieben.

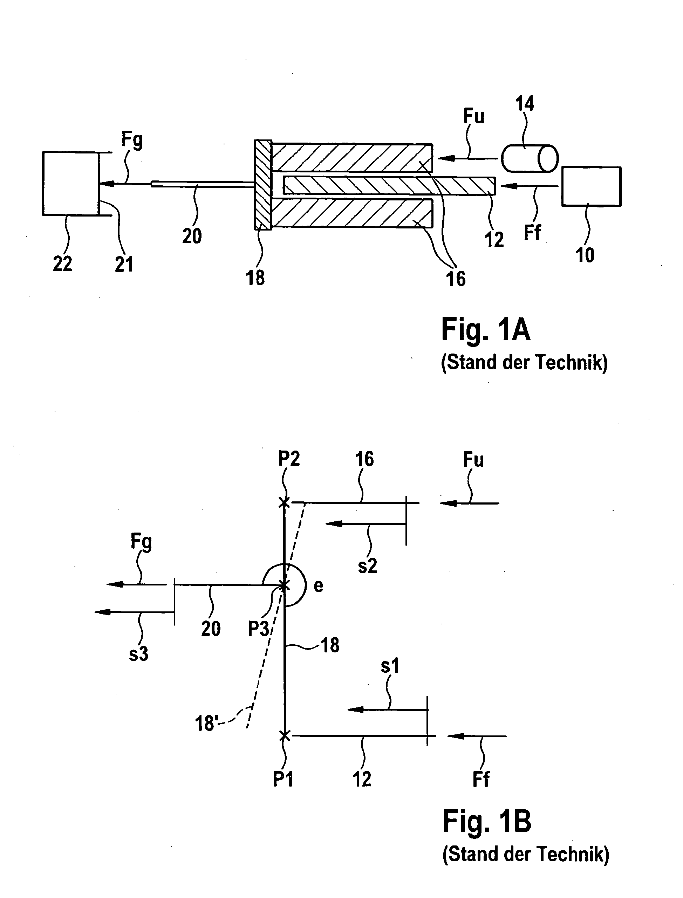

Fig. 1A und B zeigen schematische Darstellungen zum Erläutern einer Funktionsweise eines herkömmlichen Bremskraftverstärkers.

Das in Fig. 1A teilweise schematisch wiedergegebene Bremssystem weist ein Betätigungselement 10 auf, welches beispielsweise als Bremspedal ausgebildet ist. Über ein Betätigen des Betätigungselements 10 kann der Fahrer eine Fahrerbremskraft Ff und einen ersten Verstellweg s1 auf eine weiterleitende Komponente des Bremssystems, beispielsweise auf einen Eingangskolben 12, ausüben (siehe Ersatzschaltbild der Fig. 1B). Zusätzlich ist die Fahrerbremskraft Ff über eine (nicht skizzierte) Betätigungselement-Sensorik erfassbar. Die Betätigungselement-Sensorik umfasst beispielsweise einen Kraftsensor zum Messen der Fahrerbremskraft Ff. Als Alternative oder als Ergänzung zu dem Kraftsensor kann die Betätigungselement-Sensorik auch einen Wegsensor zum Ermitteln des ersten Verstellwegs s1 und/oder eines Differenzwegs zwischen dem ersten Verstellweg s1 und einem (nachfolgen beschriebenen) zweiten Verstellweg s2 aufweisen.

Das Bremssystem weist zusätzlich einen Bremskraftverstärker 14 auf. Der Bremskraftverstärker 14 ist dazu ausgelegt, eine Unterstützungskraft Fu bereitzustellen, damit der Fahrer die zum Abbremsen seines Fahrzeugs benötigte Kraft nicht vollständig als Fahrerbremskraft Ff aufbringen muss.

Die von dem Bremskraftverstärker 14 bereitgestellte Unterstützungskraft Fu kann eine Funktion der Fahrerbremskraft Ff, des ersten Verstellwegs s1 und/oder des Differenzwegs sein. Der Bremskraftverstärker 14 überträgt die Unterstützungskraft Fu und einen zweiten Verstellweg s2 auf einen Unterstützungskolben 16, welcher zusammen mit dem Eingangskolben 12 an ein Koppelelement, wie die gezeigte Reaktionsscheibe 18, gekoppelt ist. In dem Ersatzschaltbild der Fig. 1B wirken der Eingangskolben 12 auf einen ersten Punkt P1 und der Unterstützungskolben 16 auf einen zweiten Punkt P2 der Reaktionsscheibe 18. Wie der Fachmann erkennt, entsprechen die Punkte P1 und P2 Flächen der Reaktionsscheibe 18. Beispielsweise entspricht der Punkt P2 bei einem rohrförmigen Unterstützungskolben 16 einer Ringfläche.

Das Betätigungselement 10 und der Bremskraftverstärker 14 sind so in dem Bremssystem angeordnet, dass zumindest die Fahrerbremskraft Ff und die Unterstützungskraft Fu eine Gesamtbremskraft Fg und einen dritten Verstellweg s3 bewirken, welche auf eine ausgangsseitig von dem Koppelelement angeordnete Komponente, wie beispielsweise dem Ausgangskolben 20, übertragbar sind. Dabei berührt der Ausgangskolben 20 die Reaktionsscheibe 18 an einem dritten Punkt P3, bzw. an einer entsprechenden Fläche.

Im Falle einer elastischen Reaktionsscheibe 18 wird diese bei einer Fahrerbremskraft Ff ≠ 0 und/oder einer Unterstützungskraft Fu ≠ 0 deformiert (in Fig. 1B nicht dargestellt). Die Verbiegbarkeit der Reaktionsscheibe 18 kann als Elastizität e angegeben werden.

Der Ausgangskolben 20 ist an eine verstellbare Komponente 21 eines Kraft-Druck-Umwandlungselements, beispielsweise eines Hauptbremszylinders 22, gekoppelt. An das Kraft-Druck-Umwandlungselement ist mindestens ein mit einem Bremsmedium gefüllter (nicht skizzierter) Bremskreis mit mindestens einem Radbremszylinder angeschlossen. Durch eine Veränderung eines Bremsdrucks in dem mindestens einen Radbremszylinder kann das mindestens eine zugeordnete Rad abgebremst werden.

Bei einer Betätigung des Betätigungselements 10 des anhand der Figuren 1A und 1B dargestellten herkömmlichen Bremssystems spürt der Fahrer jedoch häufig eine fremd induzierte Verstellung des Betätigungselements 10. Dabei wird unter einer fremd induzierten Verstellung des Betätigungselements 10 eine Bewegung des Betätigungselements 10 verstanden, welche nicht auf eine von dem Fahrer auf das Betätigungselement 10 ausgeübte Bewegung, Betätigung und/oder Kraft direkt zurückzuführen ist. Der Fahrer erfährt die fremd induzierte Verstellung des Betätigungselements 10 beispielsweise als Zittern und/oder Gegenstoß des Betätigungselements 10. Eine derartige fremd induzierte Verstellung des Betätigungselements 10 ist für den Fahrer sehr oft irritierend, und beeinträchtigt somit den Bedienkomfort des Betätigungselements 10 erheblich.

Es ist deshalb wünschenswert, über ein Bremssystem mit einem verbesserten Bedienkomfort des Betätigungselements zu verfügen.

Offenbarung der Erfindung

Die Erfindung schafft ein Bremskraftverstärkersystem für ein Bremssystem eines Fahrzeugs mit den Merkmalen des Anspruchs 1 und ein Verfahren zum Betreiben eines Bremssystems eines Fahrzeugs mit den Merkmalen des Anspruchs 8.

Die vorliegende Erfindung beruht auf der Erkenntnis, dass die für den Fahrer irritierende fremd induzierte Verstellung des Betätigungselements des Bremssystems häufig auf eine von einem Kraft-Druck-Umwandlungselement auf den ersten Kolben ausgeübte Verstellkraft zurückzuführen ist. Das Kraft-Druck-Umwandlungselement, an welches mindestens ein Bremskreis des Bremssystems angekoppelt ist, kann ein Hauptbremszylinder des Bremssystems sein. Die Verstellkraft wird beispielsweise bei einem Verschieben eines Bremsmediumvolumens aus dem mindestens einen Bremskreis in das Kraft-Druck-Umwandlungselement ausgelöst. Ein derartiges Verschieben eines Bremsmediumvolumens tritt insbesondere bei einer Verringerung der Gesamtbremskraft aus der Fahrerbremskraft und der Unterstützungskraft, bei einer Aktivierung einer Pumpe eines Bremskreises, bei einem Schalten eines Ventils und/oder bei einer EV-Aktivierung auf. Über die bereitgestellte zweite Information ist ein derartiger Betriebsmodus des Bremssystems erkennbar.

Des Weiteren basiert die vorliegende Erfindung auf der Erkenntnis, dass es möglich ist, mittels einer zweiten Aktoreinrichtung, eine festgelegte Ausgleichskraft auf den ersten Kolben des Bremssystems auszuüben.

Insbesondere wirkt die festgelegte Ausgleichsskraft der (wahrscheinlichen) Verstellkraft entgegen. Auf diese Weise verhindert die vorliegende Erfindung eine fremd induzierte Verstellung des Betätigungselements und verbessert damit den Bedienkomfort für den Fahrer. Insbesondere führt das Ausüben der Ausgleichskraft durch die zweite Aktoreinrichtung zu einem verbesserten Pedalgefühl für den Fahrer.

Unter dem ersten Kolben ist eine Einrichtung zur mechanischen/hydraulischen Kopplung des Betätigungselements an das Kraft-Druck-Umwandlungselement zu verstehen. Entsprechend ist mit dem zweiten Kolben eine Einrichtung zur mechanischen/hydraulischen Kopplung der ersten Aktoreinrichtung an das Kraft-Druck-Umwandlungselement gemeint. Die vorliegende Erfindung ist somit nicht auf eine Ausbildung des ersten Kolbens und/oder des zweiten Kolbens im engeren Sinn des Begriffs eingeschränkt. Vorzugsweise sind der erste Kolben und/oder der zweite Kolben so ausgebildet, dass sie über das Kraft-Druck-Umwandlungselement ein direktes Einbremsen des Fahrers in mindestens einen Bremskreis ermöglichen. Unter dem ersten Kolben und/oder dem zweiten Kolben kann insbesondere auch eine Einrichtung zur hydraulischen Kraftübertragung verstanden werden.

Das hier beschriebene Bremskraftverstärkersystem und das korrespondierende Verfahren sind an einem kostengünstigen Bremssystem mit einem einfachen Aufbau anwendbar. In der Regel wird zum Verwenden des Bremskraftverstärkersystems und zum Ausführen des Verfahrens keine zusätzliche Sensorik des Bremssystems benötigt. Somit ist eine kostengünstige Nutzung der vorliegenden Erfindung gewährleistet.

Insbesondere kann das erfindungsgemäße Bremskraftverstärkersystem unter Verwendung mindestens eines herkömmlichen Bremskraftverstärkers als Aktoreinrichtung hergestellt werden. Somit sind die Betriebsvorteile eines herkömmlichen Bremskraftverstärkers auch bei dem Bremskraftverstärkersystem gewährleistet.

In einer bevorzugten Ausführungsform umfasst die bereitgestellte zweite Information eine Bremsmoment-Information über eine zeitliche Änderung eines zweiten Bremsmoments, welches zusätzlich zu dem ersten Bremsmoment auf das mindestens eine Rad ausübbar ist. Als Ergänzung dazu kann die Steuereinrichtung zusätzlich dazu ausgelegt sein, unter Berücksichtigung der Bremsmoment-Information die Unterstützungskraft um eine der zeitlichen Änderung des zweiten Bremsmoments entsprechende Differenz zu verändern. Beispielsweise wird bei einer Zunahme des zweiten Bremsmoments die Unterstützungskraft um eine der Zunahme entsprechende Differenz reduziert. Entsprechend kann bei einer Abnahme des zweiten Bremsmoments die Unterstützungskraft um eine der Abnahme entsprechende Differenz gesteigert werden. Auf diese Weise ist insbesondere ein Einhalten eines zeitlich konstanten Bremsmoments aus dem ersten Bremsmoment und dem zweiten Bremsmoment trotz der zeitlichen Änderung des zweiten Bremsmoments leicht ausführbar.

Herkömmlicherweise treten trotz einer gleichbleibenden Betätigung des Betätigungselements des Bremssystems durch den Fahrer häufig Schwankungen an der Gesamtverzögerung des Fahrzeugs auf. Diese Schwankungen sind oft auf eine Steigerung oder eine Reduzierung des zweiten Bremsmoments zurückzuführen. Eine derartige Situation tritt insbesondere auf, wenn während eines Abbremsens des Fahrzeugs ein Generatormoment zum Aufladen einer Fahrzeugbatterie aktiviert wird.

Nach dem Stand der Technik ist ein Verblenden des zweiten Bremsmoments in der Regel nur über ein Entkoppeln des Betätigungselements von dem mindestens einen Bremskreis des Bremssystems und eine zusätzliche Aktor-Komponente zum Bereitstellen der sonst von dem Fahrer über das Betätigen des Betätigungselements aufgebrachten Bremskraft ausführbar. Eine derartige Entkoppelung des Betätigungselements von dem mindestens einem Bremskreis ist jedoch mit dem Risiko verbunden, dass bei einem Ausfall der Aktor-Komponente der Fahrer nicht mehr direkt in den mindestens einen Bremskreis hineinbremsen und die ausgefallene Aktor-Komponente überbrücken kann. Somit bewirkt das Entkoppeln des Betätigungselements von dem mindestens einen Bremskreis eine Reduzierung der Sicherheit des Bremssystems.

Demgegenüber ist die oben beschriebene Ausführungsform auch bei einer mechanischen Kopplung zwischen dem Betätigungselements und dem mindestens einem Bremskreis anwendbar. Somit ist zusätzlich zu dem Verblenden des zweiten Bremsmoments auch eine gute Sicherheit des Bremssystems gewährleistet.

In einer vorteilhaften Weiterbildung ist die Steuereinrichtung zusätzlich dazu ausgelegt ist, unter Berücksichtigung der Bremsmoment-Information die Ausgleichskraft hinsichtlich einer wahrscheinlichen Verstellkraft des Kraft-Druck-Umwandlungselements auf den ersten Kolben, welche der Differenz entspricht, festzulegen. Somit ist der bei einem herkömmlichen Bremssystem häufig auftretende Nachteil, dass ein Verblenden des zweiten Bremsmoments zu einer Änderung der Volumenaufnahme des Bremssystems, und damit zu einer Bewegung des Betätigungselements führt, behebbar. Damit ist nicht nur das Gesamtbremsmoment an die zeitliche Änderung des zweiten Bremsmoments angepasst, sondern es ist auch gewährleistet, dass das Betätigungselement beim Verblenden keine fremd induzierte Bewegung ausführt. Der Fahrer nimmt somit das Verblenden des zweiten Bremsmoments auch nicht über eine fremd induzierte Bewegung des Betätigungselements war. Dies verbessert zusätzlich den Bedienkomfort des Betätigungselements.

Des Weiteren kann die Steuereinrichtung zusätzlich dazu ausgelegt sein, die Unterstützungskraft unter zusätzlicher Berücksichtigung der festgelegten Ausgleichskraft festzulegen. Beispielsweise wird die festgelegte Ausgleichskraft von der Unterstützungskraft abgezogen. Das Bereitstellen der Ausgleichskraft bewirkt somit kein zusätzliches Bremsmoment, sonder lediglich ein Hebelmoment, welches eine Druck- und/oder Volumenänderung des Kraft-Druck-Umwandlungselements beim Verblenden des zweiten Bremsmoments kompensiert. Auf diese Weise ist das Pedalgefühl zusätzlich verbesserbar.

Die in den oberen Absätzen beschriebenen Vorteile sind auch bei einem Bremssystem mit einem derartigen Bremsverstärkersystem und einem Fahrzeug mit einem entsprechenden Bremssystem gewährleistet.

Des Weiteren sind die oben beschriebenen Vorteile auch durch ein korrespondierendes Verfahren zum Betreiben eines Bremssystems eines Fahrzeugs realisierbar.

Zusätzlich gewährleistet die vorliegende Erfindung eine Überwachung der Bremsanlage, insbesondere der Reaktionsscheibe des Bremssystems. Dabei können eine In-Stopp-Kalibrierung und/oder ein Ausgleich von Alterungsvorgängen ausgeführt werden.

Kurze Beschreibung der Zeichnungen

Weitere Merkmale und Vorteile der vorliegenden Erfindung werden nachfolgend anhand der Figuren erläutert.

Es zeigen:

Fig. 1A und B     schematische Darstellungen zum Erläutern einer Funktionsweise eines herkömmlichen Bremskraftverstärkers;

Fig. 2     eine schematische Darstellung einer Ausführungsform des Bremskraftverstärkersystems;

Fig. 3A bis 3E     vier schematische Darstellungen und ein Koordinatensystem zum Erläutern einer Funktionsweise des Bremskraftverstärkersystems der Fig. 2; und

Fig. 4     ein Flussdiagramm zum Darstellen einer Ausführungsform des Verfahrens zum Betreiben eines Bremssystems eines Fahrzeugs.

Ausführungsformen der Erfindung

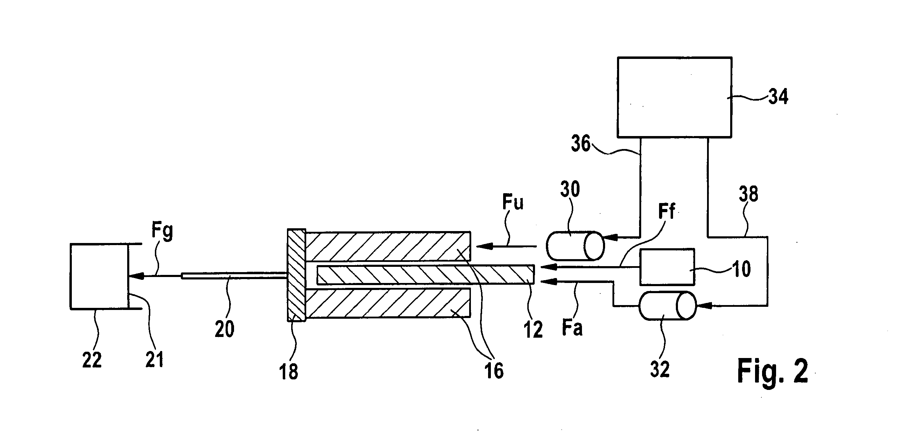

Fig. 2 zeigt eine schematische Darstellung einer Ausführungsform des Bremskraftverstärkersystems.

Das dargestellte Bremskraftverstärkersystem ist an einem Bremssystem mit den schon beschriebenen Komponenten 10, 12 und 16 bis 22 angeordnet. Das Betätigungselement 10 des Bremssystems kann beispielweise ein Bremspedal sein. Mindestens ein Bremskreis ist an dem als Hauptbremszylinder 22 ausgebildeten Kraft-Druck-Umwandlungselement mit der verstellbaren Komponente 21 angeschlossen.

Die Anwendbarkeit des im Weiteren beschriebenen Bremskraftverstärkersystems ist nicht auf eine bestimmte Ausführungsform eines mit einem Bremsgas oder einer Bremsflüssigkeit gefüllten Bremskreises beschränkt. Beispielsweise sind verschiedene Alternativmöglichkeiten bezüglich des Volumenmanagements im Bremssystem denkbar. Da diese anhand der nachfolgenden Beschreibungen für einen Fachmann naheliegend sind, wird hier nicht weiter darauf eingegangen.

Es wird darauf hingewiesen, das die Anwendbarkeit des Bremskraftverstärkersystems auch nicht auf den dargestellten Kopplungsmechanismus aus dem Eingangskolben 12, dem (z.B. rohrförmigen) Unterstützungskolben 16 und der Reaktionsscheibe 18 beschränkt ist. Beispielsweise kann anstelle der Reaktionsscheibe 18 auch ein anderes Bremskraftverstärker-Betätigungselement-Koppelelement zum Addieren der Fahrerbremskraft Ff und der Unterstützungskraft Fu zu der Gesamtbremskraft Fg eingesetzt werden. Dabei kann die Gesamtbremskraft Fg noch mindestens eine zusätzliche Kraft, auf welche im Folgenden noch eingegangen wird, umfassen.

Das Bremskraftverstärkersystem umfasst zumindest eine erste Aktoreinrichtung 30, eine zweite Aktoreinrichtung 32 und eine Steuereinrichtung 34, auf deren Funktionsweise nachfolgend genauer eingegangen wird:

Die Steuereinrichtung 34 ist dazu ausgelegt, unter Berücksichtigung einer bereitgestellten ersten Information bezüglich der Fahrerbremskraft Ff, welche bei einer Betätigung des Betätigungselements 10 auf den Eingangskolben 12 übertragen wird, eine (vorteilhafte) Unterstützungskraft Fu festzulegen. Nach dem Festlegen der (vorteilhaften) Unterstützungskraft Fu gibt die Steuereinrichtung 34 ein entsprechendes erstes Steuersignal 36 an die erste Aktoreinrichtung 30 aus.

Bevorzugterweise wird die Unterstützungskraft Fu als Funktion von der Fahrerbremskraft Ff und/oder dem (nicht skizzierten) ersten Verstellweg s1 des Betätigungselements 10 festgelegt. Dabei können die Fahrerbremkraft Ff und/oder der erste Verstellweg s1 des Betätigungselements 10 (bzw. des Eingangskolben 12) über eine nicht dargestellte Betätigungselement-Sensorik ermittelt werden und anschließend als erste Information an die Steuereinrichtung 34 bereitgestellt werden. Eine geeignete Betätigungselement-Sensorik umfasst vorzugsweise einen Kraftsensor und/oder einen Wegsensor, wie beispielsweise einen Pedalwegsensor. Die Betätigungselement-Sensorik kann eine Untereinheit der Steuereinrichtung 34 sein. Ebenso kann die Betätigungselement-Sensorik getrennt von der Steuereinrichtung 34 angeordnet sein, wobei insbesondere die erste Information über einen Fahrzeugbus an die Steuereinrichtung 34 bereitstellbar ist.

Die erste Aktoreinrichtung ist dazu ausgelegt, das erste Steuersignal 36 zu empfangen und die dem empfangenen ersten Steuersignal 36 entsprechende Unterstützungskraft Fu auf den Unterstützungskolben 16 auszuüben. Somit ist gewährleistet, dass die Gesamtbremskraft Fg aus zumindest der Fahrerbremskraft Ff und der Unterstützungskraft Fu auf den als Kraft-Druck-Umwandlungselement fungierenden Hauptbremszylinder 22 übertragen wird. Dabei ist das Kraft-Druck-Umwandlungselement (der Hauptbremszylinder 22) so ausgebildet, dass ein der Gesamtbremskraft Fg entsprechender Bremsdruck an den mindestens einen angekoppelten Bremskreis des Bremssystems übertragen wird. Dieser Bremsdruck wirkt über den mindestens einen Radbremszylinder des mindestens einen angekoppelten Bremskreis als hydraulisches Bremsmoment auf mindestens ein zugeordnetes Rad.

Durch das Bereitstellen der Unterstützungskraft Fu ist gewährleistet, dass der Fahrer eine geringere Fahrerbremskraft Ff zum Abbremsen des Fahrzeugs aufbringen muss. Damit wird dem Fahrer das Abbremsen des Fahrzeugs kraftmäßig erleichtert. Durch die Verwendung des Bremskraftverstärkersystems ist somit der Bedienkomfort des Bremssystems verbessert.

Die Steuereinrichtung 34 ist zusätzlich dazu ausgelegt, unter Berücksichtigung einer bereitgestellten zweiten Information bezüglich eines Betriebsmodus des Bremssystems eine Ausgleichskraft Fa festzulegen. Dabei wird die Ausgleichskraft Fa so festgelegt, dass die Ausgleichskraft Fa einer wahrscheinlichen Verstellkraft, welche bei dem Betriebsmodus entsprechend der zweiten Information durch den Hauptbremszylinder auf den Eingangskolben 12 ausübbar ist, entgegenwirkt. Unter der wahrscheinlichen Verstellkraft wird eine Kraft verstanden, welche mit einer hohen Wahrscheinlichkeit bei dem Betriebsmodus auftritt. Dabei wird die wahrscheinliche Verstellkraft so auf den Eingangskolben 12 ausgeübt, dass der Eingangskolben 12 verstellt wird. Die wahrscheinliche Verstellkraft wird durch eine Druckänderung im Inneren des Kraft-Druck-Umwandlungselements/Hauptbremszylinders 22, durch eine Volumenänderung des Kraft-Druck-Umwandlungselements/Hauptbremszylinders 22 und/oder durch ein Verstellen der verstellbaren Komponente 21 bereitgestellt.

Nach einem Festlegen der Ausgleichskraft Fa gibt die Steuereinrichtung 34 ein entsprechendes zweites Steuersignal 38 an die zweite Aktoreinrichtung 32 aus. Die zweite Aktoreinrichtung 32 ist dazu ausgelegt, das zweite Steuersignal 38 zu empfangen und eine entsprechende Ausgleichskraft Fa auf den Eingangskolben 12 auszuüben.

Somit ist gewährleistet, dass der Eingangskolben 12 nicht durch die bei dem Betriebsmodus zu erwartende Verstellkraft des Hauptbremszylinders 22 auf den Eingangskolben 12 verstellt wird. Damit ist eine Druck- und/oder Volumenänderung des Hauptbremszylinders 22, welche herkömmlicher Weise zu einer fremd induzierten Verstellung des Eingangkolbens 12 und des Betätigungselements 10 führt, unterbindbar. Deshalb kann beispielsweise einer Aktivierung einer Pumpe, einem Schalten eines Ventils und/oder einer Verschiebung eines Bremsmediumvolumens zwischen dem Hauptbremszylinder 22 und dem mindestens einem (nicht skizzierten) Bremskreis mittels des Bremskraftverstärkersystems so entgegen gewirkt werden, dass keine fremd induzierte Bewegung des Betätigungselements 10 erfolgt.

Beispielweise umfasst die bereitgestellte zweite Information eine Bremsmoment-information über eine zeitliche Änderung eines Zusatz-Bremsmoments, welches zusätzlich zu dem hydraulischen Bremsmoment auf mindestens ein Rad des Fahrzeugs ausgeübt wird. Die zweite Information bezüglich des Betriebsmodus des Bremssystems ist beispielweise die Bremsmoment-Information über eine Aktivierung, eine Deaktivierung, eine Steigerung und/oder eine Reduzierung des Zusatz-Bremsmoments. Wie im Weiteren ausführlicher beschrieben wird, kann in diesem Fall die Steuereinrichtung 34 dazu ausgelegt sein, das Zusatz-Bremsmoment zu verblenden und gleichzeitig eine fremd induzierte Verstellung des Betätigungselements 10 aufgrund des Verblendens des Zusatz-Bremsmoment zu unterbinden. Vorteilhafterweise kann das Zusatz-Bremsmoment ein Generatorbremsmoment und/oder ein Schleppmoment sein.

Die Aktoreinrichtungen 30 und 32 können beispielsweise ein elektromechanischer Bremskraftverstärker, ein elektrischer Bremskraftverstärker, ein Vakuum-Bremskraftverstärker und/oder ein hydraulischer Bremskraftverstärker sein. Selbstverständlich können auch mehr als zwei Bremskraftverstärker als Aktoreinrichtung 30 und 32 eingesetzt werden. Ebenso können die beiden Aktoreinrichtungen 30 und 32 Untereinheiten eines Gesamt-Bremskraftverstärkers sein. Gegebenenfalls kann die Steuereinrichtung 34 ebenfalls eine Untereinheit des Gesamt-Bremskraftverstärkers sein. Dem Fachmann ist damit nahegelegt, dass die Anwendbarkeit des Bremskraftverstärkersystems nicht auf einem bestimmten Typ eines (Gesamt-)Bremskraftverstärkers als Aktoreinrichtung 30 oder 32 beschränkt ist.

Es wird hier darauf hingewiesen, dass die Aktoreinrichtungen 30 oder 32 getrennt ansteuerbar sind. Das bedeutet beispielsweise, dass die von den Aktoreinrichtungen 30 oder 32 bereitgestellten Kräfte Fu und Fa unabhängig voneinander festlegbar und bereitstellbar sind.

Die zweite Aktoreinrichtung 32 kann auch dazu ausgebildet sein, die Ausgleichskraft Fa als zusätzliche Reibungskraft bei einem Verstellen des Eingangskolbens 12 bereitzustellen/zu bewirken. Eine derartige Ausbildung der zweiten Aktoreinrichtung 32 ist leicht ausführbar. In diesem Fall können der Eingangskolben 12 und die zweite Aktoreinrichtung 32 als Bestandteile eines selbstverstärkenden Bremssystems ausgebildet sein.

Bei einer bevorzugten Ausführungsform ist die Steuereinrichtung 34 dazu ausgelegt, die Ausgleichskraft Fa so festzulegen, dass die bei dem Betriebsmodus wahrscheinliche Verstellkraft durch die Ausgleichskraft Fa kompensiert wird. Damit ist sicher gewährleistet, dass der Fahrer keine fremd induzierte Verstellung beim Betätigen des Betätigungselements 10 bemerkt.

In einer vorteilhaften Weiterbildung ist die Steuereinrichtung 34 zusätzlich dazu ausgelegt, die Unterstützungskraft Fu unter zusätzlicher Berücksichtigung der Bremsmoment-Information festzulegen. In diesem Fall wird die Unterstützungskraft Fu hinsichtlich einer Aktivierung, einer Deaktivierung, einer Steigerung und/oder einer Reduzierung des Zusatz-Bremsmoments angepasst.

Insbesondere kann eine zeitliche Änderung des Zusatz-Bremsmoments eine Neu-Festlegung der Unterstützungskraft Fu um eine der zeitlichen Änderung entsprechende Differenz bewirken. Vorzugsweise erfolgt die Neu-Festlegung der Unterstützungskraft Fu so, dass ein Gesamtbremsmoment aus dem hydraulischen Bremsmoment und dem Zusatz-Bremsmoment trotz der zeitlichen Änderung des Zusatz-Bremsmoments konstant gehalten wird.

Zusätzlich kann die Steuereinrichtung 34 dazu ausgelegt sein, die Ausgleichskraft Fa so festzulegen, dass die Ausgleichskraft Fa einer wahrscheinlichen Verstellkraft, welche der Differenz, um welche die Unterstützungskraft Fu neu festgelegt wird, entgegenwirkt. Die Ausgleichskraft Fa wirkt in diesem Fall einer wahrscheinlichen Verstellkraft entgegen, welche darauf zurückzuführen ist, dass die um die Differenz geänderte Unterstützungskraft Fu eine Änderung der Gesamtbremskraft Fg um die Differenz, und damit eine Änderung des hydraulischen Bremsmoments bewirkt. Die Änderung des hydraulischen Bremsmoments führt in der Regel zu einer Druckänderung im Inneren des Hauptbremszylinders 22 und damit zu einer Verschiebung der verstellbaren Komponente 21 des Hauptbremszylinders 22. Somit besteht eine Relation zwischen der Differenz, um welche die Unterstützungskraft Fu neu festgelegt wird und der wahrscheinlichen Verstellkraft. Über die hier beschriebene Ausführungsform sind die Nachteile, welche sich herkömmlicherweise aufgrund dieser Relation ergeben, jedoch auf einfache Weise behebbar. Vorzugsweise kompensiert die Ausgleichskraft Fa dabei die der Differenz entsprechende wahrscheinliche Verstellkraft.

Des Weiteren kann die Steuereinrichtung 34 dazu ausgelegt sein, die Unterstützungskraft Fu nach einem Festlegen der Ausgleichskraft Fa an die festgelegte Ausgleichskraft Fa anzupassen. Vorteilhafterweise legt die Steuereinrichtung 34 nach dem Festlegen der Ausgleichskraft Fa eine neue Unterstützungskraft Fu fest, welche um die Ausgleichskraft Fa von der bisher geltenden Unterstützungskraft Fu abweicht. Somit bewirkt das Festlegen der Ausgleichskraft Fa keine Änderung der Gesamtbremskraft Fg oder des hydraulischen Bremsmoments.

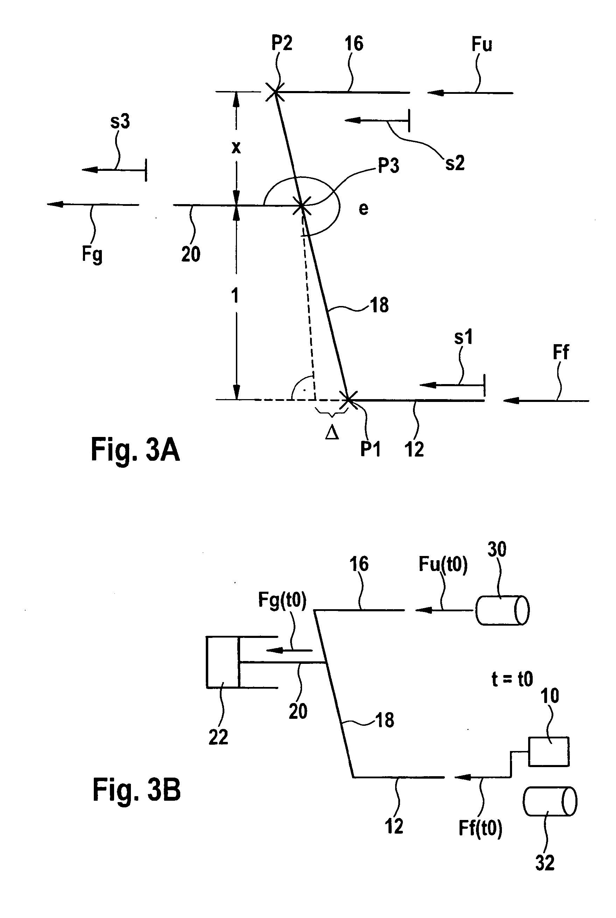

Auf die Funktionsweise des Bremskraftverstärkersystems wird nachfolgend noch unter Bezugnahme auf die Fig. 3A bis 3E genauer eingegangen.

Fig. 3A bis 3E zeigen vier schematische Darstellungen und ein Koordinatensystem zum Erläutern einer Funktionsweise des Bremskraftverstärkersystems der Fig. 2.

Fig. 3A zeigt ein Ersatzmodell zum Darstellen einer Deformation der Reaktionsscheibe 18 bei einer Fahrerbremskraft Ff ≠ 0 und einer Unterstützungskraft Fu ≠ 0. Die Ausgleichskraft Fa ist der besseren Anschaulichkeit wegen in Fig. 3A gleich Null. Wie der Fachmann erkennt, kann zusätzlich zu der Fahrerbremskraft Ff, der Unterstützungskraft Fu und der Ausgleichskraft Fa noch eine weitere Kraft zur Gesamtbremskraft Fg beitragen. Allerdings wird dieser Fall im Folgenden der besseren Anschaulichkeit wegen nicht beachtet.

Die Reaktionsscheibe 18 kann eine "geregelte Elastizität" darstellen. Die Punkte P1 bis P3 entsprechen Flächen auf der Reaktionsscheibe 18. Ein Quotient x gibt das Verhältnis eines ersten Abstands zwischen den Punkten P2 und P3 und eines zweiten Abstands zwischen den Punkten P3 und P1 an. Wird der Punkt P1 im Bezug auf den Punkt P3 um eine Verbiegegröße Δ der Reaktionsscheibe 18 verstellt, so gilt:

$$\text{(Gl 1)} \qquad s1 = s3 + \Delta$$

Ein Verstellen des Ausgangskolbens 20 um den dritten Verstellweg s3 bewirkt somit in der Regel ein Verstellen des Eingangskolbens 12 und des Betätigungselements 10 um den ersten Verstellweg s1. Vorzugsweise ist ein nicht-skizzierter Differenzwegsensor an der Reaktionsscheibe 18 angeordnet, welcher die Verbiegegröße Δ direkt misst.

Aus dem Momentengleichgewicht an der Reaktionsscheibe 18 erhält man:

$$\text{(Gl 2)} \qquad \Delta * e = Ff - x * Fu$$

Durch Einsetzten der Gleichung (Gl 2) in die Gleichung (Gl 1) erhält man deshalb:

$$\text{(Gl 3)} \qquad s1 = s3 + (Ff - x * Fu)/e$$

Die Relation entsprechend der Gleichung (Gl 3) zwischen dem ersten Verstellweg s1 des Betätigungselements 10 und dem dritten Verstellweg s3 des Ausgangskolbens 20 führt herkömmlicherweise häufig zu einer Beeinträchtigung des Betätigungskomforts des Betätigungselements 10. Beispielsweise kann aufgrund der Relation eine Druckänderung in dem Kraft-Druck-Umwandlungselement (dem Hauptbremszylinder 22) und/oder in dem Bremskreis herkömmlicherweise zu einer für den Fahrer irritierenden fremd induzierten Verstellung des Betätigungselements 10 führen. Mittels des Bremskraftverstärkersystems ist dieser herkömmliche Nachteil behebbar.

Fig. 3B zeigt ein Ersatzmodell des Bremssystems mit dem Bremskraftverstärkersystem zu einem Zeitpunkt t0. Der Anschaulichkeit wegen wird nachfolgend davon ausgegangen, dass der Fahrer ab dem Zeitpunkt t0 auf das Betätigungselement 10 eine zeitlich konstante Fahrerbremskraft Ff und einen zeitlich konstanten ersten Verstellweg s1 ausübt. Entsprechend werden zum Zeitpunkt t0 eine zeitlich konstante Unterstützungskraft Fu und ein zeitlich konstanter zweiter Verstellweg s2 von der ersten Aktoreinrichtung 30 bereit gestellt. Die Unterstützungskraft Fu und der zweite Verstellweg s2 sind über die Ansteuerung der ersten Aktoreinrichtung 30 durch die Steuereinrichtung 34 bekannt. Die Ausgleichskraft Fa ist zum Zeitpunkt t0 gleich Null.

Es wird hier darauf hingewiesen, dass die hier beschriebene Anwendung des Bremskraftverstärkersystems nicht auf eine zeitlich konstante Betätigung des Betätigungselements 10 durch den Fahrer beschränkt ist. Das Beschreiben der Funktionsweise des Bremskraftverstärkersystems bei einer zeitlich konstanten Betätigung des Betätigungselements 10 dient lediglich der besseren Anschaulichkeit.

Zum Zeitpunkt t0 wirkt somit auf mindestens ein dem Bremskreis zugeordnetes Rad ein konstantes hydraulisches Bremsmoment Mh, welches sich aus einem von dem Hauptbremszylinder 22 bereitgestellten Bremsdruck p (proportional zu der Gesamtbremskraft Fg) und einer Konstante C ergibt:

$$\text{(Gl 4)} \qquad Mh = C * p$$

Zu einem Zeitpunkt t* > t0 wird ein Zusatz-Bremsmoment Mz ungleich Null aktiviert. Die im Weiteren beschriebene Anwendung des Bremskraftverstärkersystems ist jedoch auch ausführbar, sofern das Zusatz-Bremsmoment Mz gesteigert, reduziert oder deaktiviert wird. Das Zusatz-Bremsmoment Mz ist beispielsweise ein Generator-Bremsmoment. Anstelle eines Generator-Bremsmoments kann jedoch auch ein anderes Zusatz-Bremsmoment Mz mittels des Bremskraftverstärkersystems verblendet werden.

Das Gesamtbremsmoment Mg(t*) setzt sich somit zu dem Zeitpunkt t* aus dem hydraulischen Bremsmoment Mh und dem Zusatz-Bremsmoment Mz zusammen:

$$(Gl\ 5) \qquad Mg(t^*) = Mh(t^*) + Mz(t^*),$$

Trotz des Zusatz-Bremsmoments $Mz(t^*) \neq 0$ ist es wünschenswert, bei einer konstanten Betätigung des Betätigungselements 10 durch den Fahrer ein konstantes Gesamtbremsmoment Mg einzuhalten, mit:

$$(Gl\ 6) \qquad Mg(t > t^*) = Mg(t0)$$

Das Bremskraftverstärkersystem mit den Komponenten 30 bis 34 ist vorzugsweise dazu ausgelegt, die Konstanthaltung des Gesamtbremsmoments Mg trotz der Aktivierung des Zusatz-Bremsmoments Mz (t > t0) zu gewährleisten.

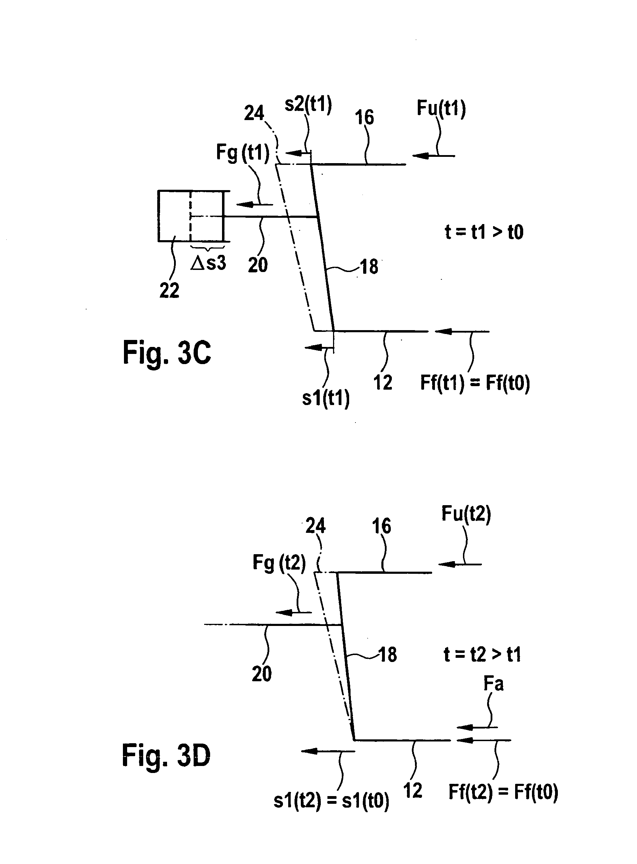

Fig. 3C zeigt ein Ersatzmodell zu einem Zeitpunkt t1 > t*. Zwischen den Zeitpunkten t* und t1 hat die Steuereinrichtung 34 unter Berücksichtigung des Zusatz-Bremsmoments Mz eine neue Unterstützungskraft Fu festgelegt. Dabei gilt für eine festgelegte Differenz D zwischen der Unterstützungskraft Fu(t0) zum Zeitpunkt t0 und der Unterstützungskraft Fu(t1) zum Zeitpunkt t1. Dann gilt:

$$(Gl\ 7) \qquad Fu(t1) = Fu(t0) + D$$

Somit gilt bei gleichbleibender Fahrerbremskraft Ff:

$$(Gl\ 8) \qquad Fg(t1) = Fg(t0) + D$$

Vorzugsweise kompensiert die Differenz D das Zusatz-Bremsmoment Mz, so dass Gleichung (Gl 6) gilt und die gesamte Verzögerung des Fahrzeugs zum Zeitpunkt t1 der Verzögerung des Fahrzeugs zum Zeitpunkt t0 entspricht:

$$(Gl\ 9) \qquad D = Mz * A\ /\ C,$$

wobei A einer Fläche des Hauptbremszylinders 22 entspricht, oder

$$(Gl\ 10) \qquad D = \alpha\ x\ Mz,$$

wobei $\alpha$ eine Konstante des Bremssystems ist.

Der Fahrer wird somit nicht bei der Aktivierung des Zusatz-Bremsmoments Mz durch eine Beeinträchtigung der Verzögerung des Fahrzeugs irritiert.

Allerdings bewirkt eine Änderung der Unterstützungskraft Fu/der Gesamtbremskraft Fg um die Differenz D eine Verschiebung eines Bremsmediumvolumens zwischen dem Hauptbremszylinder 22 und dem mindestens einem Bremskreis des Bremssystems. Durch diese Verschiebung wird der dritte Verstellweg s3 des Ausgangskolbens 20 um eine Wegdifferenz $\Delta$s3 geändert. Entsprechend kann sich auch die Stellung der Reaktionsscheibe 18 verändern, wie über die gestrichelte Linie 24, welche der Stellung der Reaktionsscheibe 18 zum Zeitpunkt t0 entspricht, dargestellt ist. Des Weiteren kann die veränderte Stellung der Reaktionsscheibe 18 die Stellung des Eingangskolbens 12 verändern und damit eine fremd induzierte Verstellung des Betätigungselements 10 bewirken. Eine derartige fremd induzierte Verstellung des Betätigungselements 10 ist für den Fahrer herkömmlicherweise sehr irritierend.

Das hier beschriebene Bremskraftverstärkersystem verfügt jedoch über zwei unabhängig regelbare Aktoreinrichtungen 30 und 32. Über diese beiden Aktoreinrichtungen 30 und 32 existieren zwei Freiheitsgrade, die es ermöglichen, zusätzlich zu einem Verblenden des Zusatz-Bremsmoments Mz durch die erste Aktoreinrichtung 30 die zweite Aktoreinrichtung 32 so anzusteuern, das einer (wahrscheinlichen) Verstellkraft, welche auf die um die Differenz D veränderte Unterstützungskraft Fu/Gesamtbremskraft Fg und ein entsprechend verändertes hydraulisches Bremsmoment zurückführbar ist, entgegen gewirkt wird.

Fig. 3D zeigt das Ersatzmodell zum Zeitpunkt t2 nach einem Bereitstellen der Ausgleichskraft Fa, welche der wahrscheinlichen Verstellkraft entgegenwirkt, und einem Anpassen der Unterstützungskraft Fu an die bereitgestellte Ausgleichskraft Fa. Vorzugsweise ist die Ausgleichskraft Fa so festgelegt, dass für den ersten Verstellweg s1 gilt:

$$(Gl\ 11) \qquad s1\ (t2) = s1\ (t0),\ bei$$

$$(Gl\ 12) \qquad Ff\ (t2) = Ff\ (t1) = Ff\ (t0)$$

Der erste Verstellweg s1(t2) ist somit zum Zeitpunkt t2 wieder mit dem ersten Verstellweg s1(t0) zum Zeitpunkt t0 identisch. Somit ist gewährleistbar, dass die mit dem Verblenden des Zusatz-Bremsmoments verbundene Verschiebung des Bremsmediumvolumens zwischen dem Hauptbremszylinder und dem mindestens einem Bremskreis keine Verstellbewegung des Betätigungselements 10 bewirkt.

Damit das Entgegenwirken der wahrscheinlichen Verstellkraft nicht mit einer geänderten Gesamtverzögerung des Fahrzeugs verbunden ist, ist es vorteilhaft, wenn gilt:

$$(Gl\ 13) \qquad Fg(t2) = Fg(t1),\ mit$$

$$(Gl\ 14) \qquad Fg(t2) = Ff(t2) + Fu(t2) + Fa(t2)$$

Damit wird auch das der Gesamtbremskraft Fg entsprechende hydraulische Bremsmoment Mh konstant gehalten.

Um Gleichung (Gl 13) zu gewährleisten kann die Unterstützungskraft Fu an die von der zweiten Aktoreinrichtung 32 bereitgestellte Ausgleichskraft Fa angepasst werden. In diesem Fall gilt:

$$(Gl\ 15) \qquad Fu(t2) = Fu(t1) - Fa = Fu(t0) + D - Fa$$

Somit wird ab dem Zeitpunkt t1 ein zusätzliches freies Moment (Drehmoment) auf die Reaktionsscheibe 18 aufgebracht. Dies geschieht, indem die von den beiden Aktoreinrichtungen 30 und 32 aufgebrachten Kräfte Fu und Fa so modifiziert werden, dass die zumindest aus der Fahrerbremskraft Ff, der Unterstützungskraft Fu und der Ausgleichskraft Fa zusammen gesetzte Gesamtbremskraft Fg ab dem Zeitpunkt t1 zeitlich konstant bleibt. Die Änderung der Kräfte Fu und Fa erfolgt vorzugsweise entsprechend dem Quotienten x.

Wie der Fachmann erkennt, werden bei dem hier beschriebenen Verfahren die Konstanthaltung der Verzögerung des Fahrzeugs und die Konstanthaltung des ersten Verstellwegs s1 entkoppelt und unabhängig voneinander durchgeführt. Insbesondere kann der Quotient x so festgelegt sein, dass ein vorteilhaftes Hebelverhältnis vorliegt.

Das auf diese Weise bewirkte Drehmoment der Reaktionsscheibe 18 beeinflusst somit nicht das hydraulische Bremsmoment Mh. Das Drehmoment bewirkt lediglich eine zusätzliche Deformation der Reaktionsscheibe 18. Diese Deformation ist verwendbar, um den ersten Verstellweg s1(t2) zum Zeitpunkt t2 des Eingangskolbens 12 so einzustellen, dass er gleich dem Verstellweg s1(t0) zum Zeitpunkt t0 vor der zeitlichen Veränderung des Zusatz-Bremsmoments Mz ist. Auf diese Weise ist gewährleistbar, dass der Fahrer keine fremd induzierte Verstellung des Betätigungssystems 10 spürt und somit von dem Zusatz-Bremsmoment Mz nichts bemerkt.

Die Verbiegegröße Δ kann so modifizierbar sein, dass sie negativ wird. Auf diese Weise ist selbst ein relativ großes Bremsmediumvolumen, welches zwischen dem Hauptbremszylinder und dem mindestens einem Bremskreis verschoben wird, so kompensierbar, dass keine Rückwirkungen auf eine Stellung des Betätigungselements 10 für den Fahrer feststellbar sind.

Wie der Fachmann erkennt, können die in den oberen Absätzen beschriebenen Verfahrensschritte so schnell ausgeführt werden, dass das Zeitintervall zwischen den Zeitpunkten t0 und t2 gegen Null geht. Damit wird der erste Verstellweg s1 als zeitlich konstant von dem Fahrer wahrgenommen.

Zur Veranschaulichung der Funktionsweise des Bremskraftverstärkersystems wird nachfolgend ein Zahlenbeispiel angegeben:

Ein Kleinwagen weist z.B. eine Reaktionsscheibe 18 mit einer Elastizität e von 1,8 x 10$^{-5}$ N/m und einem Quotienten x von 0,25 auf. (Dieser Quotient x entspricht einem Verstärkungsfaktor der ersten Aktoreinrichtung 30 von 5.) Die Pedalübersetzung liegt beispielsweise bei 3,15. Der Hauptbremszylinder 22 kann einen Durchmesser von 20,62 mm haben.

Der Fahrer gibt über die Betätigung eines als Bremspedal ausgebildeten Betätigungselements 10 bei dem hier beschriebenen Bespiel ein Gesamtbremsmoment gleich einer Gesamtverzögerung von 0,3 g vor. Dies entspricht einer Pedalkraft von 53,5 N und einem Pedalweg von 28,4 mm. Der Hauptzylinderdruck liegt bei 19 bar.

Die Unterstützungskraft Fu beträgt somit 580,6 N. Entsprechend liegt die Verbieggröße Δ in einem Bereich zwischen -0,5 bis -1 mm. Im Folgenden wird von dem Wert -0,5 mm ausgegangen. Gemäß Gleichung (Gl. 2) liegt der dritte Verstellweg bei 8,5 mm.

Zu dem Zeitpunkt t* wird ein Zusatz-Bremsmoment entsprechend einer Verzögerung von 0,15 g aktiviert. Das hydraulische Bremsmoment Mh wird deshalb bis zum Zeitpunkt t1 auf einen Wert gleich einer Verzögerung von 0,15 g reduziert. Dies geschieht über ein Anpassen der bereitgestellten Unterstützungskraft Fu.

Zum Verblenden des Zusatz-Bremsmoments Mz gleich einer Verzögerung von 0.15 g wird die von der ersten Aktoreinrichtung 30 ausgeübte Unterstützungskraft von 580,6 N auf 42 N reduziert. Damit der erste Verstellweg zeitlich konstant bleibt, wird die Biegegröße Δ auf 1,4 mm neu eingeregelt. (Die Verbiegegröße Δ liegt mit 1,4 mm innerhalb der möglichen Werte.) Die von der zweiten Aktoreinrichtung 32 bereitgestellte Ausgleichskraft Fa liegt bei 167 N.

Ein größerer Bremsdruck bewirkt ein größeres verblendbares Zusatz-Bremsmoment Mz, da die Volumenaufnahme pro bar mit steigenden Druck abnimmt und der auszublendende Pedalweg somit kleiner wird.

Nachfolgend werden zwei mögliche Regelstrategien zum Festlegen einer geeigneten Unterstützungskraft Fa beschrieben:

Bei einer ersten Regelstrategie wird nach dem Verblenden des Zusatz-Bremsmoments Mz die (vorteilhafte) Verbiegegröße Δ über Gleichung (Gl 2) aus den bekannten Größen e, Ff, x und Fu berechnet. Das Einstellen der (vorteilhaften) Verbiegegröße Δ erfolgt über die erste Aktoreinrichtung 30. Entsprechend wird die Ausgleichskraft Fa, welche von der zweiten Aktoreinrichtung bereit gestellt wird, derart geregelt, dass für den ersten Verstellweg s1 gilt: s1(t2) = s1(t0)

Diese Regelungsstrategie ist vorteilhaft, sofern das Bremssystem bereits eine Sensorik aufweist, welche zum Bestimmen der Verbiegegröße Δ oder einer entsprechenden Information über die Reaktionsscheibe 18 ausgelegt ist. Da die Unterstützungskraft Fu und der zweite Verstellweg s2 bereits über die Ansteuerung der ersten Aktoreinrichtung 30 bekannt sind, ist die erste Regelstrategie in diesem Fall ausführbar, ohne das ein zusätzlicher Sensor notwendig ist.

Die im Weiteren beschriebene zweite Regelstrategie ist vorteilhaft, sofern der Verzögerungswunsch des Fahrers über ein Messen des ersten Verstellwegs s1 bestimmt wird. Da über die Regelung der ersten Aktoreinrichtung 30 sowohl der zweite Verstellweg s2 als auch die aufgebrachte Unterstützungskraft Fu bekannt sind, kann mit Hilfe einer gemessenen Verbiegegröße Δ die Fahrerbremskraft Ff entsprechend (Gl 2) berechnet werden. Somit ist auch die Gesamtbremskraft Fg für Fa = 0 (d.h. vor dem Aktivieren der Ausgleichskraft Fa) bekannt über:

$$\text{(Gl 16)} \qquad Fg = Ff + Fu$$

Wird die Unterstützungskraft Fu um eine Differenz D ≠ 0 verändert, so kann mit Hilfe einer Kraft-Weg-Kennlinie des Bremssystems die zugehörige Verstellgröße Δ s3 bestimmt werden, für welche gilt:

$$\text{(GI 17)} \qquad \Delta s3 = s3(t0) - s3(t1)$$

Die Kraft-Weg-Kennlinie kann beispielsweise in der Steuereinrichtung 34 hinterlegt sein.

Somit liegen alle benötigten Informationen vor, um die Ausgleichskraft Fa so festzulegen, dass vorzugsweise der erste Verstellweg s1(t2) bis zum Zeitpunkt t2 auf den zum Zeitpunkt t0 eingestellten ersten Verstellweg s1(t0) eingestellt wird. Die weiteren Rechenschritte sind für einen Fachmann anhand der vorhergehenden Ausführungen nahe gelegt.

Die zweite Regelstrategie hat den Vorteil, dass die Modifikation des ersten Verstellwegs s1 nicht über eine Regelung, sonder über eine Steuerung ausführbar ist. Auf diese Weise sind Schwankungen während eines Regelzyklus unterbindbar.

Vorzugsweise wird die Ausgleichskraft Fa der zweiten Aktoreinrichtung 32 fest vorgegeben, während bezüglich der ersten Aktoreinrichtung 30 eine Regelung verwendet wird, die die Verbiegegröße $\Delta$ auf einen vorteilhaften Wert regelt. Hierdurch ist sicher gestellt, dass bei einer weiteren Kraftausübung auf das Betätigungselement 10 durch den Fahrer eine Bremskraftverstärkung weiterhin statt findet.

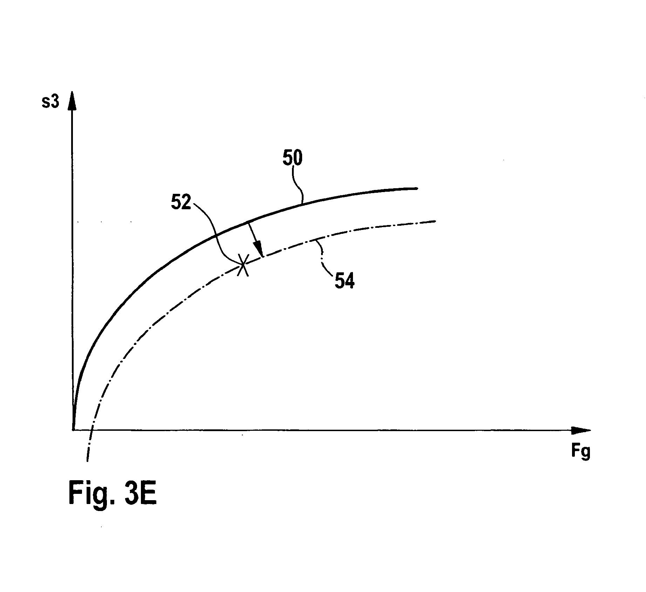

Fig. 3E zeigt ein Koordinatensystem mit einer geeigneten Kraft-Weg-Kennlinie 50. Dabei entspricht die Abszisse einer Gesamtbremskraft Fg. Die Ordinate gibt den zugehörigen dritten Verstellweg s3 an.

Während der Verwendung des Bremskraftverstärkersystems können Alterungsprozesse zu einer Verschiebung der Kraft-Weg-Kennlinie 50 führen. Derartige Alterungsprozesse sind beispielsweise auf eine Dämpfung oder eine Reibung zurückzuführen.

Die Alterungsprozesse können ausgeglichen werden, indem Messpunkte 52 für Wertepaare des dritten Verstellwegs s3 und die Gesamtbremskraft Fg während der Verwendung des Bremskraftverstärkersystems ermittelt werden. Vorzugsweise wird ein Messpunkt 52 bei einem Anstieg des Zusatz-Bremsmoments Mz festgelegt. Unter Verwendung mindestens eines auf diese Weise festgelegten Messpunkts 52 kann eine nachkalibrierte Kraft-Weg-Kennlinie 54 festgelegt werden. Die Steuereinrichtung 34 somit dazu ausgelegt sein, anhand von mindestens einem Messpunkt 52 die nachkalibrierte Kraft-Weg-Kennlinie 54 festzulegen. Beispielsweise wird die Kraft-Weg-Kennlinie 50 unter Berücksichtigung mindestens eines festgelegten Messpunkts 52 verschoben. Auf diese Weise sind Alterungsprozesse kompensierbar.

Da die Elastizität e der Reaktionsscheibe 18 ebenfalls einer Alterung unterliegt, ist es vorteilhaft, die Elastizität e während der Verwendung des Bremskraftverstärkersystems neu festzulegen. Dies kann beispielsweise geschehen, indem bei einer Betätigung des Betätigungselements während eines Fahrzeugstillstands die aus der Fahrerbremskraft Ff resultierende Deformierung der Reaktionsscheibe 18 durch Aktivierung der ersten Aktoreinrichtung 30 bestimmt wird. Insbesondere ist es vorteilhaft, wenn der Fahrer während einer derartigen Messung nicht die Fahrerbremskraft Ff erhöht. Dies ist nachprüfbar, indem der erste Verstellweg s1(ta) am Anfang der Messung und der erste Verstellweg s1(te) am Ende der Messung bestimmt wird. Erhöht der Fahrer während der Messung nicht die Fahrerbremskraft Ff, so gilt:

$$\text{(GI 18)} \qquad s1(te) - s1(ta) = s3(te) - s3\,(ta) - x(Fu\,(te) - Fu(ta))/e$$

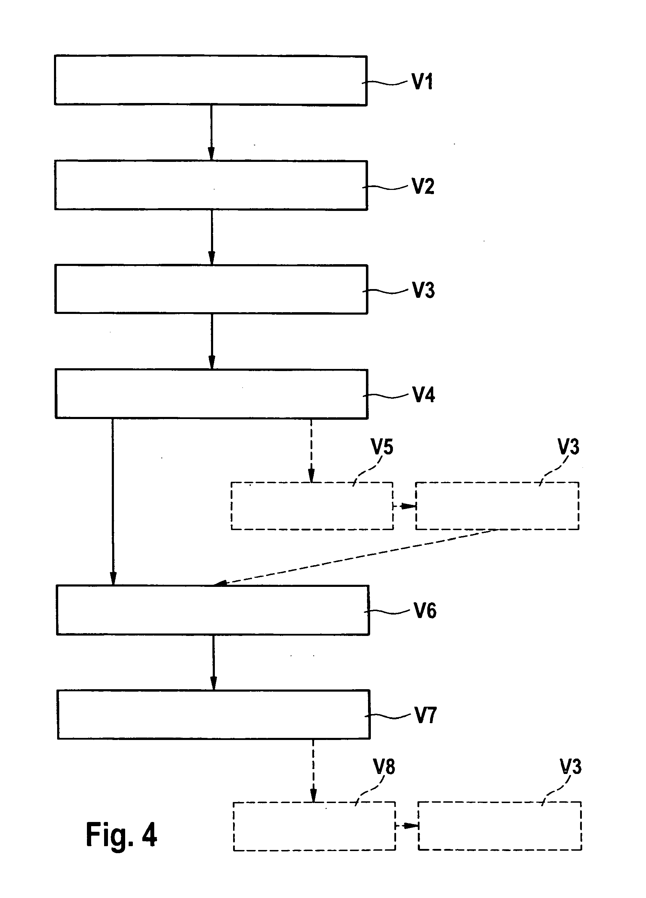

Fig. 4 zeigt ein Flussdiagramm zum Darstellen einer Ausführungsform des Verfahrens zum Betreiben eines Bremssystems eines Fahrzeugs.

In einem Verfahrensschritt V1 wird eine erste Information bezüglich einer Fahrerbremskraft, welche bei einer Betätigung eines Betätigungselements des Bremssystems durch einen Fahrer des Fahrzeugs auf einen ersten Kolben des Bremssystems übertragen wird, übermittelt. Die erste Information kann beispielsweise eine auf den ersten Kolben aufgebrachte Fahrerbremskraft, einen ersten Verstellweg des ersten Kolbens und/oder einen Differenzweg umfassen. Anschließend wird in einem Verfahrensschritt V2 eine Unterstützungskraft unter Berücksichtigung der ermittelten ersten Information festgelegt. Vorzugsweise ist die festgelegte Unterstützungskraft eine Funktion der Fahrerbremskraft und/ oder des ersten Verstellwegs.

In einem weiteren Verfahrensschritt V3 wird eine erste Aktoreinrichtung zum Ausüben der festgelegten Unterstützungskraft auf einen zweiten Kolben des Bremssystems angesteuert. Dabei wird eine Gesamtbremskraft aus zumindest der Fahrerbremskraft und der Unterstützungskraft auf ein Kraft-Druck-Umwandlungselement des Bremssystems übertragen. Mindestens ein Bremskreis ist an das Kraft-Druck-Umwandlungselement angekoppelt. Ein der Gesamtbremskraft entsprechender Bremsdruck wird als erstes Bremsmoment auf mindestens ein Rad des Fahrzeugs ausgeübt. Das Kraft-Druck-Umwandlungselement ist beispielsweise ein Hauptbremszylinder.

Während der Verfahrensschritte V1 bis V3 oder nachfolgend wird eine zweite Information bezüglich eines Betriebsmodus des Bremssystems ermittelt (Verfahrensschritt V4). Beispielsweise wird als zweite Information eine Bremsmoment-Information über eine zeitliche Änderung eines zweiten Bremsmoments, welches zusätzlich zu dem ersten Bremsmoment (hydraulisches Bremsmoment) auf mindestens ein Rad des Fahrzeugs ausgeübt wird, ermittelt.

Optional kann in einem Verfahrensschritt V5 die Unterstützungskraft unter zusätzlicher Berücksichtigung der Bremsmoment-Information neu festgelegt werden. Dies kann so erfolgen, dass bei einer zeitlichen Änderung des zweiten Bremsmoments die Unterstützungskraft um eine der zeitlichen Änderung des zweiten Bremsmoments entsprechende Differenz verändert wird. Anschließend kann erneut der Verfahrensschritt V3 ausgeführt werden. Auf diese Weise ist gewährleistbar, dass trotz einer Aktivierung, einer Deaktivierung, einer Steigerung oder einer Reduzierung des zweiten Bremsmoments eine zeitlich konstante Gesamtverzögerung des Fahrzeugs eingehalten wird.

In einem Verfahrensschritt V6 wird eine Ausgleichskraft unter Berücksichtigung der ermittelten zweiten Information festgelegt. Dabei wird die Ausgleichskraft so festgelegt, dass sie einer wahrscheinlichen Verstellkraft, welche bei dem Betriebsmodus von dem Kraft-Druck-Umwandlungselement auf den ersten Kolben ausgeübt wird, entgegenwirkt. Vorzugsweise kompensiert die Ausgleichskraft die wahrscheinliche Verstellkraft. In einer bevorzugten Ausführungsform wird die Ausgleichskraft unter Berücksichtigung der Bremsmoment-Information hinsichtlich einer wahrscheinlichen Verstellkraft, welche der Differenz entspricht, festgelegt.

In einem nachfolgenden Verfahrensschritt V7 wird eine zweite Aktoreinrichtung zum Bereitstellen der festgelegten Ausgleichskraft auf den ersten Kolben angesteuert. Auf diese Weise kann beispielsweise einer bei einem Verblenden der zeitlichen Änderung des zweiten Bremsmoments ausgeführten Verschiebung eines Bremsmediumvolumens in das Kraft-Druck-Umwandlungselement durch Bereitstellen der festgelegten Ausgleichskraft entgegen gewirkt werden. Wie in den vorhergehenden Absätzen schon ausgeführt wird, ist auf diese Weise eine fremd induzierte Verstellung des Betätigungselements unterbindbar.

Optional kann in dem Verfahren ein weiterer Verfahrensschritt V8 ausgeführt werden, in welchem die Unterstützungskraft an die festgelegte Ausgleichskraft angepasst wird. Beispielsweise erfolgt dies so, dass eine Summe aus der Ausgleichskraft und der Unterstützungskraft nach einem Neu-Festlegen der Ausgleichskraft gleich einer Summe aus der Ausgleichskraft und der Unterstützungskraft vor dem Neu-Festlegen der Ausgleichskraft ist.

Das in den oberen Absätzen beschriebene Verfahren ist vor allem bei einem rekuperativen Bremsen, bei welchem ein Teil der Bewegungsenergie des Fahrzeugs in elektrische Energie umgewandelt wird, vorteilhaft. Das Generatormoment, welches ein zusätzliches Abbremsen des Fahrzeugs bewirkt, ist in der Regel abhängig von einer Geschwindigkeit des Fahrzeugs. Somit verändert sich das Generatormoment während der Bremsung. Dies führt herkömmlicherweise auch bei einer konstanten Betätigung des Bremspedals zu stark schwankenden Verzögerungen des Fahrzeugs, welche den Fahrer oft irritieren.

Aus dem Stand der Technik ist es bekannt, eine Anpassung des Gesamtbremsmoments an das Generatormoment und ein Konstanthalten eines Pedalwegs zu realisieren, indem das Betätigungselement vollständig von dem Hauptbremszylinder entkoppelt wird. In diesem Fall wird das Betätigungselement an einen Pedalwegsimulator angeschlossen, während der Druckaufbau in der hydraulischen Bremsanlage lediglich durch eine extern bereitgestellte Bremskraft bewirkt wird. Allerdings ist eine vollständige Entkopplung des Bremspedals von dem Hauptbremszylinder riskant, da der Fahrer bei einem Ausfall der die Bremskraft bereitstellenden Komponente das Entfallen der Bremskraft nicht durch die Fahrerbremskraft überbrücken kann.

Das in den oberen Absätzen beschriebene Verfahren ist auch bei einer mechanischen Kopplung des Betätigungselements an den Hauptbremszylinder ausführbar, und gewährleistet somit einen verbesserten Sicherheitsstandard des über das Verfahren betriebenen bremskraftverstärkten Bremssystems.

**Patentansprüche**

1. Bremskraftverstärkersystem für ein Bremssystem eines Fahrzeugs mit:

   einer Steuereinrichtung (34), welche dazu ausgelegt ist, unter Berücksichtigung einer bereitgestellten ersten Information bezüglich einer Fahrerbremskraft (Ff), welche bei einer Betätigung eines Betätigungselements (10) des Bremssystems durch einen Fahrer des Fahrzeugs auf einen ersten Kolben (12) des Bremssystems übertragen wird, eine Unterstützungskraft (Fu) festzulegen und unter Berücksichtigung der festgelegten Unterstützungskraft (Fu) ein erstes Steuersignal (36) bereitzustellen; und
   einer ersten Aktoreinrichtung (30), welche dazu ausgelegt ist, das erste Steuersignal (36) zu empfangen und die dem empfangenen ersten Steuersignal (36) entsprechende Unterstützungskraft (Fu) auf einen zweiten Kolben (16) des Bremssystems auszuüben, so dass eine Gesamtbremskraft (Fg) aus zumindest der Fahrerbremskraft (Ff) und der Unterstützungskraft (Fu) auf ein Kraft-Druck-Umwandlungselement (22) des Bremssystems übertragbar ist, so dass ein der Gesamtbremskraft (Fg) entsprechender Bremsdruck (p) als erstes Bremsmoment (Mh) auf mindestens ein Rad des Fahrzeugs ausübbar ist;
   **dadurch gekennzeichnet dass**,

die Steuereinrichtung (34) zusätzlich dazu ausgelegt ist, unter Berücksichtigung einer bereitgestellten zweiten Information bezüglich eines Betriebsmodus des Bremssystems eine festlegbare Ausgleichskraft (Fa) festzulegen und unter Berücksichtigung der festgelegten Ausgleichskraft ein zweites Steuersignal (38) bereitzustellen; wobei

eine zweite Aktoreinrichtung (32) des Bremskraftverstärkersystems dazu ausgelegt ist, das zweite Steuersignal (38) zu empfangen und die dem empfangenen zweiten Steuersignal (38) entsprechende Ausgleichskraft (Fa) auf den ersten Kolben (12) des Bremssystems auszuüben.

2. Bremskraftverstärkersystem nach Anspruch 1, **dadurch gekennzeichnet, dass** die Ausgleichskraft (Fa) derart festgelegt wird, dass sie einer wahrscheinlichen Verstellkraft, welche bei dem Betriebsmodus durch das Kraft-Druck-Umwandlungselement (22) auf den ersten Kolben (12) ausübbar ist, entgegenwirkt.

3. Bremskraftverstärkersystem nach Anspruch 2, wobei die bereitgestellte zweite Information eine Bremsmoment-Information über eine zeitliche Änderung eines zweiten Bremsmoments (Mz), welches zusätzlich zu dem ersten Bremsmoment (Mh) auf das mindestens eine Rad ausübbar ist, umfasst, und wobei die Steuereinrichtung (34) zusätzlich dazu ausgelegt ist, unter Berücksichtigung der Bremsmoment-Information die Unterstützungskraft (Fu) um eine der zeitlichen Änderung des zweiten Bremsmoments (Mz) entsprechende Differenz (D) zu verändern.

4. Bremskraftverstärkersystem nach Anspruch 3, wobei die Steuereinrichtung (34) zusätzlich dazu ausgelegt ist, unter Berücksichtigung der Bremsmoment-Information die Ausgleichskraft (Fa) hinsichtlich einer wahrscheinlichen Verstellkraft des Kraft-Druck-Umwandlungselements (22) auf den ersten Kolben (12), welche der Differenz (D) entspricht, festzulegen.

5. Bremskraftverstärkersystem nach einem der vorhergehenden Ansprüche, wobei die Steuereinrichtung (34) zusätzlich dazu ausgelegt ist, die Unterstützungskraft (Fu) unter zusätzlicher Berücksichtigung der festgelegten Ausgleichskraft (Fa) festzulegen.

6. Bremssystem mit einem Bremskraftverstärkersystem nach einem der vorhergehenden Ansprüche.

7. Fahrzeug mit einem Bremssystem nach Anspruch 6.

8. Verfahren zum Betreiben eines Bremssystems eines Fahrzeugs mit den Schritten:

Ermitteln einer ersten Information bezüglich einer Fahrerbremskraft (Ff), welche bei einer Betätigung eines Betätigungselements (10) des Bremssystems durch einen Fahrer des Fahrzeugs auf einen ersten Kolben (12) des Bremssystems übertragen wird (V1);
Festlegen einer Unterstützungskraft (Fu) unter Berücksichtigung der ermittelten ersten Information (V2); und Ansteuern einer ersten Aktoreinrichtung (30) zum Ausüben der festgelegten Unterstützungskraft (Fu) auf einen zweiten Kolben (16) des Bremssystems, wobei eine Gesamtbremskraft (Fg) aus zumindest der Fahrerbremskraft (Ff) und der Unterstützungskraft (Fu) auf ein Kraft-Druck-Umwandlungselement (22) des Bremssystems übertragen wird, und wobei ein der Gesamtbremskraft (Fg) entsprechender Bremsdruck (p) als erstes Bremsmoment (Mh) auf mindestens ein Rad des Fahrzeugs ausgeübt wird (V3);
**gekennzeichnet durch** die Schritte:

Ermitteln einer zweiten Information bezüglich eines Betriebsmodus des Bremssystems (V4);
Festlegen einer festlegbaren Ausgleichskraft (Fa) unter Berücksichtigung der ermittelten zweiten Information (V6); und
Ansteuern einer zweiten Aktoreinrichtung (32) zum Ausüben der festgelegten Ausgleichskraft (Fa) auf den ersten Kolben (12) (V7).

9. Verfahren nach Anspruch 8, **dadurch gekennzeichnet, dass** die festlegbare Ausgleichskraft derart festgelegt wird, dass die Ausgleichskraft einer wahrscheinlichen Verstellkraft entgegenwirkt, welche bei dem Betriebsmodus von dem Kraft-Druck-Umwandlungselement auf den ersten Kolben (12) ausgeübt wird.

10. Verfahren nach Anspruch 9, wobei als zweite Information eine Bremsmoment-Information über eine zeitliche Änderung eines zweiten Bremsmoments (Mz), welches zusätzlich zu dem ersten Bremsmoment (Mh) auf das mindestens eine Rad des Fahrzeugs ausgeübt wird, ermittelt wird, und wobei unter Berücksichtigung der Bremsmoment-Information die Unterstützungskraft (Fu) um eine der zeitlichen Änderung des zweiten Bremsmoments (Mz) entsprechende Differenz (D) verändert wird (V5).

11. Verfahren nach Anspruch 10, wobei die Ausgleichskraft (Fa) unter Berücksichtigung der Bremsmoment-Information hinsichtlich einer wahrscheinlichen Verstellkraft des Kraft-Druck-Umwandlungselements (22) auf den ersten Kolben (12), welche der Differenz (D) entspricht, festgelegt wird.

12. Verfahren nach einem der Ansprüche 9 bis 11; wobei die Unterstützungskraft (Fu) unter zusätzlicher Berücksichtigung der festgelegten Ausgleichskraft (Fa) festgelegt wird (V8).

**Claims**

1. Brake booster system for a vehicle brake system, having:

   a control device (34) which is configured to define an assistance force (Fu) by taking into account a provided first information item relating to a driver's braking force (Ff) which is transmitted to a first piston (12) of the brake system when an activation element (10) of the brake system is activated by a driver of the vehicle, and to provide a first control signal (36) by taking into account the defined assistance force (Fu); and

   a first actuator device (30) which is configured to receive the first control signal (36) and to apply the assistance force (Fu) which corresponds to the received first control signal (36) to a second piston (16) of the brake system, with the result that a total braking force (Fg) composed of at least the driver's braking force (Ff) and the assistance force (Fu) can be transmitted to a force/pressure conversion element (22) of the brake system, with the result that a brake pressure (p) which corresponds to the total braking force (Fg) can be applied as a first braking torque (Mh) to at least one wheel of the vehicle;
   **characterized in that**
   the control device (34) is additionally configured to define a definable equalizing force (Fa) by taking into account a provided second information item relating to an operating mode of the brake system, and to provide a second control signal (38) by taking into account the defined equalizing force; wherein
   a second actuator device (32) of the brake booster system is configured to receive the second control signal (38) and to apply the equalizing force (Fa) which corresponds to the received second control signal (38) to the first piston (12) of the brake system (12).

2. Brake booster system according to Claim 1, **characterized in that** the equalizing force (Fa) is defined in such a way that it counteracts a probable adjustment force which can be applied to the first piston (12) by the force/pressure conversion element (22) in the operating mode.

3. Brake booster system according to Claim 2, wherein the provided second information item comprises a braking torque information item relating to a change over time in a second braking torque (Mz) which can be applied to the at least one wheel in addition to the first braking torque (Mh), and wherein the control device (34) is additionally configured to change the assistance force (Fu) by a difference (D) which corresponds to the change over time in the second braking torque (Mz), by taking into account the braking torque information item.

4. Brake booster system according to Claim 3, wherein the control device (34) is additionally configured to define the equalizing force (Fa) with respect to a probable adjustment force of the force/pressure conversion element (22) which acts on the first piston (12) and corresponds to the difference (D), by taking into account the braking torque information item.

5. Brake booster system according to one of the preceding claims, wherein the control device (34) is additionally configured to define the assistance force (Fu) by additionally taking into account the defined equalizing force (Fa).

6. Brake system having a brake booster system according to one of the preceding claims.

7. Vehicle having a brake system according to Claim 6.

8. Method for operating a brake system of a vehicle, having the steps:

   determining a first information item relating to a driver's braking force (Ff) which is transmitted (V1) to a first piston (12) of the brake system when an activation element (10) of the brake system is activated by a driver of the vehicle;

defining an assistance force (Fu) by taking into account the determined first information item (V2); and

actuating a first actuator device (30) for applying the defined assistance force (Fu) to a second piston (16) of the brake system, wherein a total braking force (Fg) composed of at least the driver's braking force (Ff) and the assistance force (Fu) is transmitted to a force/pressure conversion element (22) of the brake system, and wherein a brake pressure (p) which corresponds to the total braking force (Fg) is applied (V3) as a first braking torque (Mh) to at least one wheel of the vehicle;

**characterized by** the steps:

determining a second information item relating to an operating mode of the brake system (V4);

defining a definable equalizing force (Fa) by taking into account the determined second information item (V6); and

actuating a second actuator device (32) for applying the defined equalizing force (Fa) to the first piston (12) (V7).

9. Method according to Claim 8, **characterized in that** the definable equalizing force is defined in such a way that the equalizing force counteracts a probable adjustment force which is applied to the first piston (12) in the operating mode of the force/pressure conversion element.

10. Method according to Claim 9, wherein a brake torque information item relating to a change over time in a second braking torque (Mz) which is applied to the at least one wheel of the vehicle in addition to the first braking torque (Mh) is determined as second information item, and wherein the assistance force (Fu) is changed (V5) by a difference (D) which corresponds to the change over time in the second braking torque (Mz), by taking into account the braking torque information item.

11. Method according to Claim 10, wherein the equalizing force (Fa) is defined by taking into account the braking torque information item relating to a probable adjustment force of the force/pressure conversion element (22) which acts on the first piston (12) and which corresponds to the difference (D).

12. Method according to one of Claims 9 to 11, wherein the assistance force (Fu) is defined (V8) by additionally taking into account the defined equalizing force (Fa).

**Revendications**

1. Système de freinage assisté pour un système de freinage d'un véhicule comprenant :

un dispositif de commande (34) qui est conçu pour définir une force d'assistance (Fu) en tenant compte d'une première information mise à disposition concernant une force de freinage de conducteur (Ff), laquelle est transmise sur un premier piston (12) du système de freinage lors d'un actionnement d'un élément d'actionnement (10) du système de freinage par un conducteur du véhicule, et pour délivrer un premier signal de commande (36) en tenant compte de la force d'assistance (Fu) définie ; et

un premier dispositif actionneur (30) qui est conçu pour recevoir le premier signal de commande (36) et exercer la force d'assistance (Fu) correspondant au premier signal de commande (36) reçu sur un deuxième piston (16) du système de freinage, de sorte qu'une force de freinage totale (Fg) au moins composée de la force de freinage de conducteur (Ff) et de la force d'assistance (Fu) puisse être transmise à un élément de conversion force/pression (22) du système de freinage, de sorte qu'une pression de freinage (p) correspondant à la force de freinage totale (Fg) puisse être exercée en tant que premier moment de freinage (Mh) sur au moins une roue du véhicule ;

**caractérisé en ce que**

le dispositif de commande (34) est en plus conçu pour définir une force de compensation (Fa) définissable en tenant compte d'une deuxième information mise à disposition concernant un mode de fonctionnement du système de freinage et pour délivrer un deuxième signal de commande (38) en tenant compte de la force de compensation définie ;

un deuxième dispositif actionneur (32) du système de freinage assisté étant conçu pour recevoir le deuxième signal de commande (38) et exercer sur le premier piston (12) du système de freinage la force de compensation (Fa) correspondant au deuxième signal de commande (38) reçu.

**2.** Système de freinage assisté selon la revendication 1, **caractérisé en ce que** la force de compensation (Fa) est définie de telle sorte qu'elle s'oppose à une force de positionnement probable pouvant être exercée sur le premier piston (12) par l'élément de conversion force/pression (22) lors du mode de fonctionnement.

**3.** Système de freinage assisté selon la revendication 2, dans lequel la deuxième information mise à disposition comprend une information de moment de freinage sur une variation dans le temps d'un deuxième moment de freinage (Mz) qui peut être exercé sur l'au moins une roue en plus du premier moment de freinage (Mh), et dans lequel le dispositif de commande (34) est en plus configuré pour modifier, en tenant compte de l'information de moment de freinage, la force d'assistance (Fu) de la différence (D) correspondant à la variation dans le temps du deuxième moment de freinage (Mz).

**4.** Système de freinage assisté selon la revendication 3, dans lequel le dispositif de commande (34) est en plus conçu pour définir, en tenant compte de l'information de moment de freinage, la force de compensation (Fa) du point de vue d'une force de positionnement probable de l'élément de conversion force/pression (22) sur le premier piston (12), laquelle correspond à la différence (D).

**5.** Système de freinage assisté selon l'une des revendications précédentes, dans lequel le dispositif de commande (34) est en plus conçu pour définir la force d'assistance (Fu) en tenant en plus compte de la force de compensation (Fa) définie.

**6.** Système de freinage équipé d'un système de freinage assisté selon l'une des revendications précédentes.

**7.** Véhicule équipé d'un système de freinage selon la revendication 6.

**8.** Procédé d'exploitation d'un système de freinage d'un véhicule comprenant les étapes suivantes :

détermination d'une première information concernant une force de freinage de conducteur (Ff), laquelle est transmise sur un premier piston (12) du système de freinage lors d'un actionnement d'un élément d'actionnement (10) du système de freinage par un conducteur du véhicule (V1) ;
définition d'une force d'assistance (Fu) en tenant compte de la première information déterminée (V2) ; et commande d'un premier dispositif actionneur (30) pour exercer la force d'assistance (Fu) définie sur un deuxième piston (16) du système de freinage, une force de freinage totale (Fg) au moins composée de la force de freinage de conducteur (Ff) et de la force d'assistance (Fu) étant transmise à un élément de conversion force/pression (22) du système de freinage, et une pression de freinage (p) correspondant à la force de freinage totale (Fg) étant exercée en tant que premier moment de freinage (Mh) sur au moins une roue du véhicule (V3) ;
**caractérisé par** les étapes suivantes :

détermination d'une deuxième information concernant un mode de fonctionnement du système de freinage (V4) ;
définition d'une force de compensation (Fa) définissable en tenant compte de la deuxième information déterminée (V6) ; et
commande d'un deuxième dispositif actionneur (32) pour exercer la force de compensation (Fa) définie sur le premier piston (12) (V7).

**9.** Procédé selon la revendication 8, **caractérisé en ce que** la force de compensation définissable est définie de telle sorte que la force de compensation s'oppose à une force de positionnement probable qui est exercée sur le premier piston (12) par l'élément de conversion force/pression lors du mode de fonctionnement.

**10.** Procédé selon la revendication 9, selon lequel la deuxième information déterminée est une information de moment de freinage sur une variation dans le temps d'un deuxième moment de freinage (Mz) qui peut être exercé sur l'au moins une roue du véhicule en plus du premier moment de freinage (Mh), et selon lequel la force d'assistance (Fu) est modifiée, en tenant compte de l'information de moment de freinage, d'une différence (D) correspondant à la variation dans le temps du deuxième moment de freinage (Mz) (V5).

**11.** Procédé selon la revendication 10, selon lequel la force de compensation (Fa) est définie, en tenant compte de l'information de moment de freinage, du point de vue d'une force de positionnement probable de l'élément de conversion force/pression (22) sur le premier piston (12), laquelle correspond à la différence (D).

**12.** Procédé selon l'une des revendications 9 à 11, selon lequel la force d'assistance (Fu) est définie en tenant en plus compte de la force de compensation (Fa) définie (V8).

Fg

22    21    20    18

14

Fu

Ff    10

12    16

**Fig. 1A**
(Stand der Technik)

P2    16    Fu

s2

Fg

s3    20    P3

18

e

18'

s1

P1    12    Ff

**Fig. 1B**
(Stand der Technik)

Fig. 2

**Fig. 3A**

**Fig. 3B**

24    s2(t1)    16    Fu(t1)

Fg (t1)

Δs3    20

22

**Fig. 3C**

18

t = t1 > t0

s1(t1)    12    Ff(t1) = Ff(t0)

24    16    Fu(t2)

Fg (t2)

20

18    t = t2 > t1

Fa

**Fig. 3D**

s1(t2) = s1(t0)    12    Ff(t2) = Ff(t0)

Fig. 3E

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005024577 A1
- DE 10057557 A1
- DE 10327553 A1